(19) Europäisches Patentamt
European Patent Office
Office européen des brevets

(11) **EP 2 169 968 A1**

(12) **EUROPEAN PATENT APPLICATION**
published in accordance with Art. 153(4) EPC

(43) Date of publication:
**31.03.2010 Bulletin 2010/13**

(51) Int Cl.:
**H04Q 1/00** *(2006.01)*

(21) Application number: **07721433.6**

(22) Date of filing: **14.06.2007**

(86) International application number:
**PCT/CN2007/001860**

(87) International publication number:
**WO 2008/151464 (18.12.2008 Gazette 2008/51)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **ZTE Corporation
Shenzhen, Guangdong 518057 (CN)**

(72) Inventors:
• **LI, Sheng
Guangdong Province 518057 (CN)**

• **XUE, Ao
Guangdong Province 518057 (CN)**
• **OUYANG, Jun
Guangdong Province 518057 (CN)**
• **WU, Feng
Guangdong Province 518057 (CN)**

(74) Representative: **Hatzmann, Martin et al
Vereenigde
Johan de Wittlaan 7
2517 JR Den Haag (NL)**

(54) **A WIRELESS NETWORK SIMULATION METHOD**

(57) The invention discloses a wireless network analog simulation method which comprises: step 402, initializing the snapshot loop; step 404, performing reverse link rate assigning process and forward processing process; step 406, calculating the average throughput and average rate of the cell on the basis of the QoS requirements of the terminal supported service; and step 408, finishing the operation if the time of the snapshot loop reaches predetermined threshold. The simulation method can be highly approximated to network conditions of the real EVDO system, and the EVDO network programming and optimization can be more efficiently directed.

Figure 4

EP 2 169 968 A1

## Description

### Field of the Invention

The invention relates to the Code Division Multiple Access (CDMA) cellular mobile communication system, in particular to a wireless network analog simulation method of the CDMA system (Evolution Data Optimized, EVDO), the principle of which also can be applied to the wireless network analog simulation of High-Speed Downlink Packet Access (HSDPA) of Wideband CDMA (WCDMA).

### Background of the Invention

Wireless network simulation is an important procedure in the whole wireless network construction and runs through the entire network construction. In the programming stage, through the network simulation, the conditions of network coverage, capacity, and the like after the scheme implementation can be simulated in the design period before a network is realized, and the scheme can be adjusted after possible problems are timely found out according to the simulation results; in the optimization stage, the feasibility of the optimization measurements such as new station addition, station information modification, etc. can be verified through the network simulation so that the effects brought by the adjustment before the optimized scheme is implemented can be estimated in advance. Therefore, the network simulation greatly saves the time of wireless network construction and operation and the cost of manpower and material resources, being an important foundation for guaranteeing high-speed and high-quality network construction.

The core of the wireless network simulation is simulation algorithm which is used for simulating the dynamic conditions of a real network so as to calculate the performance indexes of coverage, etc. in the course of the actual network operation.

At present, the targets of wireless network simulation mainly are CDMA IS95 or 1X networks, and the air interfaces of the networks adopt power control technology in forward/reverse direction. As for the downlink, the target resources of the simulation mainly consider the distribution of downlink transmission power among different terminals and different channels; and as for the uplink, target resources mainly consider the soaring of the noise of power.

In view of the technical characteristics of air interface, the common wireless network simulation method mainly adopts the Monte Carlo iteration algorithm which takes downlink power and uplink background noise threshold as judging conditions of convergence, and the chief goal of the design of the system is to access more users as possible. Therefore, aiming to realize the goal, the wireless network simulation obtains a certain number of users and the network performances in the distribution through calculation so as to verify whether the design of the network meets the requirements or not.

A snapshot method is widely adopted in the industry at present. The method distributes terminals in each snapshot according to a certain traffic distribution algorithm, keeps the terminals in the same positions in each snapshot, and assumes that the accessible terminals continuously occupy the system resource, calculates the network performances of each snapshot through the iteration, then averages a plurality of snapshot results, and takes the averaged result as the result of the whole network. When the snap objects are sufficient, the averaged result has the statistical meanings approximates to the actual practice. And as for the CDMAIS95 or 1X network, the simulation method is relatively mature and has acceptable accuracy.

Along with the increase of the requirements of the effectiveness of spectrum and the requirement of the rate, the rate requirements of uplink and downlink are dissymmetrical, so the original air interface technology cannot meet the requirements of users. Moreover, various 3G networks currently try to adopt new technologies to meet the increasing requirements. Among the new technologies, a relatively important technology is the one which adopts rate control instead of power control in downlink. The essence of rate control is the Automatic Modulation Coding (AMC) technology and combines physical layer Hybrid Automatic Repeat Request (HARQ) technology with scheduling technology of MAC (Medium Access Control) layer, and the like, make the control for resources is more efficient, the multiuser gain is obvious, and the downlink rate gets greater improvements.

The protocol of EVDO and HSDPA is the integration and embodiment of these technologies, which is more and more adopted in real commercial networks, and provides an update road for the original CDMA system. The new network also need wireless network simulation, the original Monte Carlo simulation algorithm does not combine new technologies, particularly the new technology introduced to downlink, and does not support the processing for Quality of Service (QoS) requirements. Therefore, such simulation algorithm can not favorably reflect the performances and states of real practice.

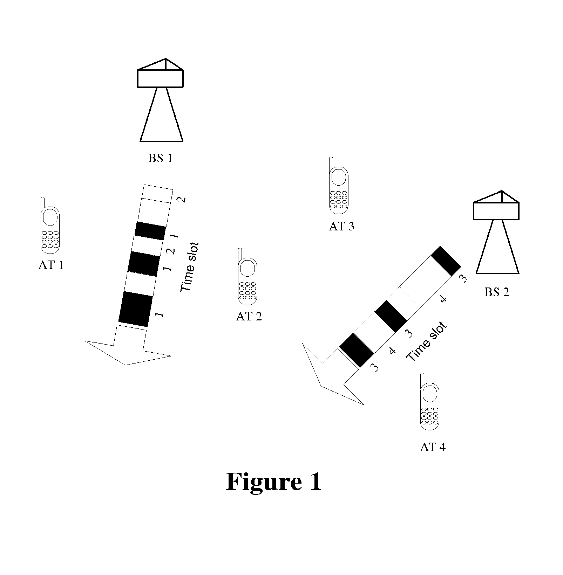

As shown in Figure 1, the following is a brief explanation for the schematic diagram of CDMA2000-1X EVDO forward channel time division multiplexing and user scheduling:

As a "wide channel", a forward channel provides time-division sharing for all users. The minimum unit of time division is slot, one slot is possibly distributed to a certain user for transmitting data or distributed to overhead massage for transmission (called active slot), and possibly in an idle state without any data transmission (called idle slot).

Because of the forward traffic channel is time division multiplexing, that data are transmitted to which user at a certain time is determined by the scheduler program of the forward channel according to a certain scheduling strategy, and the throughputs of users in different wireless environments are strongly affected by different scheduler programs.

The scheduling objectives are to make all users in the same cell as fair as possible and to maximize the total throughputs of the cell in any possible way. But the two objectives exist contradiction. For example, in order to pursue maximum throughputs of the whole cell, the scheduling strategy is supposed to transmit data to the terminals in the best wireless environment, which inevitably conduce to the results that the users in the edge environment cannot get services.

Therefore, for solving the problem of unfairness, a final scheduling algorithm is a compromises of the two objectives. At present, a Proportional fair Scheduler adopted by the common system is such an algorithm which give consideration to both efficiency and fairness, and the main principle of the Proportional Fair Scheduler lies in tracing the following two variables: current application rate DRC (k) of a user and historical throughput T (k) of a user, and carrying out scheduling according to the ratio of DRC (k)/T (k). Therefore, the higher the current application rate of the user has, the more service possibility the user gets; and the higher the historical throughput of the user has, which shows the user got more service opportunities before, then the less service possibility the user gets later.

As stated above, the wireless network simulation plays a key role in wireless network programming and optimization. If Aiming at the technical characteristics of CDMA2000-1X EVDO, and introduce service QoS requirement, it is undoubtedly ideal that a wireless network simulation method which is suitable for a base station and adopts a forward scheduling technology is provided to meet the requirements of the new air interface technology better so as to further improve the simulation accuracy and play a greater role in the programming and optimization of a new network (EVDO, HSDPA). But it is a pity that related technologies have not yet been realized at present.

**Summary of the Invention**

In view of the above problems, the main purpose of the invention is to provide a wireless network analog simulation method.

According to the embodiments of the invention, a wireless network analog simulation method is provided.

The method comprises the following operations: step 402, initializing the snapshot loop; step 404, performing reverse link rate assigning process and forward processing process; step 406, calculating the average throughput and average rate of the cell on the basis of the QoS (Quality of service) requirements of the terminal supported service; and step 408, repeating step 402 to step 406 if the time of snapshot loop does not reach predetermined threshold.

Wherein, in the step 406, under the condition that all the terminal supported services have QoS requirements, the average throughput of a forward cell is calculated through the following formula: $Throughput_{FL} = \sum_{i=1}^{p} R_{FL-i}$ ,

wherein, p indicates the number of forward reverse access terminals, and $1 < p \leq m$; under the condition that all the terminal supported services have no QoS requirements, the average throughput of the forward cell is calculated through

the following formula: $Throughput_{FL} = \dfrac{\sum_{i=m+1}^{n} DRC_i}{n-m}$ , wherein, n-m indicates the number of forward access terminals; in addition, under the condition of part of the terminal supported services have QoS requirements, the average throughput of the forward cell is calculated through the following formula: $Throughput_{FL} = \dfrac{\sum_{i=m+1}^{n} DRC_i}{n-m} * \beta + \sum_{i=1}^{p} R_{FL-i}$ , where-

in, $\beta = 1 - \sum_{i=1}^{p} \dfrac{R_{FL-i}}{DRC_i}$ , wherein, p indicates the number of forward inverse access terminals with QoS requirement,

and $1 < p \leq m$, and n-m indicates the number of the forward access terminals without QoS requirement.

The forward average rate can be calculated through the following formula: DataRate$_{FL}$ = Throughput$_{FL}$ / NumMobile, wherein, NumMobile indicates the number of forward access users. And the reverse average rate can be calculated through the following formula: DataRate$_{RL}$ = Throughput$_{RL}$ / NumMobile , wherein, NumMobile indicates the number of reverse access users, and $Throughput_{RL} = \sum_{i=1}^{k} R_{RL-i}$ , $Throughput_{RL}$ indicates the average throughput of an reverse cell.

Concretely speaking, in step 404, the reverse link rate assigning process comprises:

Step 702, sorting all the terminals according to reverse QoS priority, putting the terminals with high QoS priority service at the front of the sequence, putting the terminals with low QoS priority service after the said terminals with high QoS priority service, placing the terminals without QoS requirement randomly at the end of the sequence.

Step 704, initializing the data rate of each terminal according to the terminal access order;

Step 706, calculating the terminal service channel transmission power corresponding to the data rate and total transmission power of the terminal.

Step 708, judging whether the total transmission power of the terminal exceeds the maximum transmission power threshold;

If the judge result is yes, performing the step 712, otherwise, performing the step 710; step 710, judging whether the relative cell received noise increase exceed the threshold due to the acess of the i$^{th}$ terminal , if the judge result is yes, performing the step 712, otherwise, recording successful terminal access;

And the step 712, judging whether the date rate of the i$^{th}$ terminal can be reduced, and reducing the data rate by one grade according to the regulations of the rate grade if the result is yes, otherwise, recoding failed terminal access. Wherein, in the step 712, judging whether the data rate grade-reduced is lower than the minimum rate threshold after the data rate is redeced by one grade, returning the processing to the step 706 if the judge result is not, otherwise, recording the failed terminal access.
In addition, in the step 404, the forward processing process comprises:

Step 802, determining the total number of cells within the simulation range and initial cell;

Step 804, determining the terminals subject to the initial cell;

Step 806, sorting terminals according to forward service priority;

Step 808, sorting the terminals which can not meet the forward QoS requirements;

Step 810, judging whether there is the terminals which can not meet the forward QoS requirement according to the selected result of the step 808, if the judge result is yes, performing the step 812, otherwise, performing the step 814;

Step 812, processing the inaccessible forward terminals to the initial cell; and

Step 814, inputting accessible forward terminal sequences to the initial cell and possible to-be-deleted terminal.

Wherein, the sequence in the step 806 can be concretely processed as follows:

Step 902, reading the attributes of the terminals contained in the snapshot one by one and checking whether the terminal supported services have priority requirements;

Step 904, attributing the terminals without priority requirement to the set of forward terminals without forward priority;

Step 906, attributing the QoS services terminals with priority requirement to the set of terminals with forward priority; and

Step 908, sorting the terminals in the set of terminals with forward priority according to the priority after the ergodicity of all terminals, and putting the terminals in the set of terminals with forward priority at the front of the terminal sequence; and randomly sorting the terminals in the set of terminals without forward priority, and putting the terminals in the set of terminals without forward priority at the rear of the terminal sequence.

Herein, the step 908 can concretely comprise the following process:

Step 1002, sorting the terminals of the cell according to the forward service priority;

Step 1004, setting P=1, and determining the number of terminals with QoS requirement is M, wherein, M is an integer which is greater than or equal to zero;

Step 1006, judging whether P is greater than M or not, outputting the accessible terminal sequences and inaccessible terminal sequences if P is larger than M, and performing the processing to step 1008 if P is smaller than or equal to M,;

Step 1008, the previous P terminals with QoS requirements are judged according to the following formulas and the subsequent processing is performed according to the judge result:

$$\text{Formula 1:} \quad \frac{R_{FL-1}}{DRC_1} + \frac{R_{FL-2}}{DRC_2} + \quad \bullet\bullet\bullet \quad + \frac{R_{FL-p}}{DRC_p} < 1$$

$$\text{Formula 2:} \quad \frac{R_{FL-1}}{DRC_1} + \frac{R_{FL-2}}{DRC_2} + \quad \bullet\bullet\bullet \quad + \frac{R_{FL-p}}{DRC_p} = 1$$

$$\text{Formula 3:} \quad \frac{R_{FL-1}}{DRC_1} + \frac{R_{FL-2}}{DRC_2} + \quad \bullet\bullet\bullet \quad + \frac{R_{FL-p}}{DRC_p} > 1;$$

Wherein, if the formula 1 is tenable, set P=P+1, and the processing performing to the step 1006; if the formula 2 is tenable, all terminals after the Pth terminal are put into the set of inaccessible terminals, and the accessible terminal sequences and inaccessible terminal sequences are outputted; and if the formula 3 is tenable, the Pth terminal is put into the set of inaccessible terminals, and set P=P+1, and the processing is performing to the step 1006;
Moreover, between the step 404 and the step 406, the forward adjustment algorithm is performed, if forward adjustment is required, or the reverse adjustment algorithm is performed if reverse adjustment is required.
In addition, before the step 402, the following processings are included: calculating the corresponding forward DRC(Date Rate Control) rate of the candidate set on each grid on the basis of the comparison of the real forward demodulation signal to noise ratio Îor/Ioc and system demodulation threshold; wherein, the current grid supported forward DRC rate group corresponding to different cells are determined by checking the table according to the value of real signal to noise ratio Îor/Ioc on each grid, and when the real Îor/Ioc value is between the corresponding demodulation thresholds of two data rates, the lower rate is taken as the supportable forward DRC rate.
Aiming at the technical characteristics of CDMA2000-1 EVDO and introducing QoS requirement, the above technical scheme of the invention enables the wireless network simulation method to meet the requirements of the new air interface technology better and further improve the simulation accuracy and enables the wireless network simulation to highly approximate to the real network conditions of new network systems (EFDO, HSDPA), so the wireless network simulation can play a greater role in the programming and optimization so as to direct the network programming and optimization in higher efficiency.

**Description of the Drawings**

The figures described herein are used for providing further understanding for the invention, which form part of the application. The schematic embodiment and the description thereof of the invention are used for describing the invention and does not have improper limit for the invention. Among the figures:

Figure 1 is the schematic diagram according to the channel time-division multiplexing of a relevant technology;

Figure 2 is the overall flow chart of real operations of the wireless network analog simulation method according to the embodiment of the invention;

Figure 3 is the flow chart of the determination of candidate sets in the processing of Figure 2;

Figure 4 is the flow chart of the wireless network analog simulation method according to the embodiment of the invention;

Figure 5 is the processing flow chart of the first plan of the wireless network analog simulation method according to the embodiment of the invention;

Figure 6 is the processing flow chart of the second plan of the wireless network analog simulation method according to the embodiment of the invention;

Figure 7 is the reverse link data rate assigning process of the wireless network analog simulation method according to the embodiment of the invention;

Figure 8 is the forward processing flow chart of the wireless network analog simulation method according to the embodiment of the invention;

Figure 9 is the processing flow chart about sorting the priority of forward services in the forward processing; and

Figure 10 is the processing flow chart about selecting the set of forward inaccessible terminals in the forward processing process.

## Detailed Description of the Invention

Fully considering the technical characteristics of AMC technology, combination of a physical layer and the HARQ technology, rate control, particularly the scheduling mechanism of a base station, and the like, and also considering the simulation processing of the hybrid service combining services with QoS requirement and services without QoS requirement, the present invention provides a new network analog simulation method which is simple and clear and can accurately reflect the varieties of the air interface technology.

In a word, in the present invention: firstly, aiming at the characteristics of full power transmission of forward channel in CDMA2000-1X EVDO, the forward basic coverage static analysis is finished at the first stage of the simulation processing; secondly, the reverse basic coverage iterative analysis is finished during the iteration process of simulation processing; thirdly, aiming at the QoS requirement of the service in the current real system, the judgment and processing of the QoS requirement are introduced to the simulation method, and the reverse rate adjustment is performed according to the processing result; finally, through the processing of the scheduling algorithm, a new algorithm is introduced to finish the calculation of the forward average rate and the throughput of the cell.

The embodiment of the invention is described hereinafter in detail by referring to the drawings.

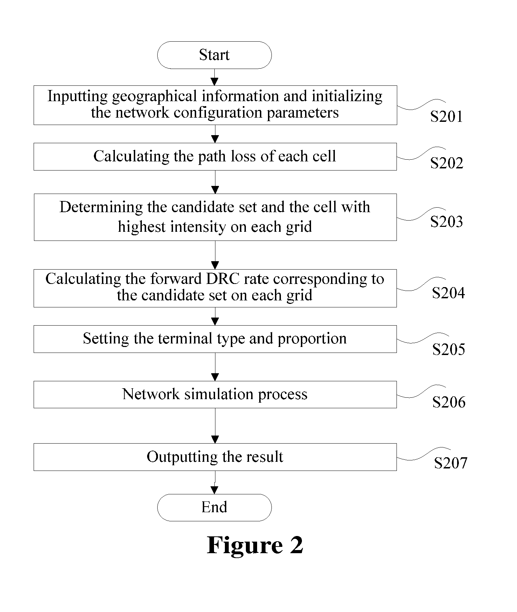

As shown in figure 2, based on the principle of time-division multiplexing of forward channel in GDMA2000-1X EVDO and user scheduling, and combining the network simulation algorithm, the processing used for implementing the wireless network analog simulation method of the present invention comprises:

Step 201, inputting geographic information and initializing network configuration parameters;

In the step, the initialization operation of the wireless network simulation is performed, wherein mainly comprising inputting a three-dimensional electronic map and giving initial values to a network including base stations, terminals, carrier waves, carriers, and the like. The three-dimensional electronic map at least includes elevation, and additionally has ground scene information and vector information of roads, rivers, etc.

Step 202, calculating the path loss of each cell;

In the step, firstly, determining the simulation range; then calculating the path loss of each cell on each grid in a specified range, and grid is a square which takes the smallest precision of the three-dimensional electronic map as the side length and is the divisibly smallest unit of the three-dimensional electronic map; the specified range is determined by setting a certain path loss threshold, and when the path loss of the cell on a certain grid exceeds the threshold, the distance between the grid and the cell can be considered so far that the influence of the cell can be neglected. The value of the path loss threshold is variable and affected by environment and network scale.

Step 203, determining the candidate set and the cell with highest intensity on each grid:

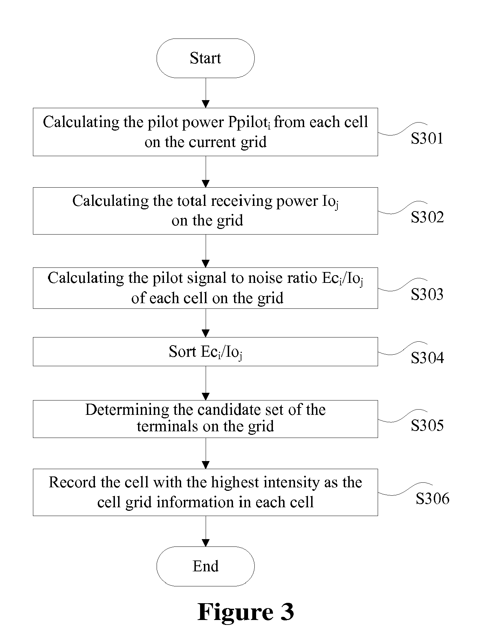

The determination of the candidate set is based on the pilot frequency signal to noise ratio from the relevant cell to each grid, wherein the pilot frequency signal to noise ratio is closely related to the path loss of each grid relative to the relevant cell. The forward channel of CDMA2000-1X EVDO adopts a full power transmission, namely, the power of the forward pilot frequency channel is the total power of forward transmission, the pilot frequency signal to noise ratio from the relevant cell to each grid can be calculated through the pilot frequency transmission power and the path loss, and coverage cell candidate set on each grid can be determined through sorting from maximum to minimum and comparing with the setting threshold of candidate set; and then the cell with the strongest pilot frequency signal to noise ratio is recorded, and in each cell, the strongest cell is recorded as the grid information of the cell. The step is shown in Figure 3.

Step 204, calculating the forward DRC rate corresponding to the candidate set on each grid:

Based on the coverage cell candidate set, the forward Date Rate Control (DRC) of CDMA2000-1X EVDO supported by each cell in the candidate set on each grid is calculated. The calculation of the DRC rate is based on the comparison between the forward real demodulation signal to noise ratio Îor/Ioc and the system demodulation threshold. Different system demodulation thresholds correspond to different DRC rates, and the forward DRC rate groups supported by different cells corresponding to the current grid can be determined by referring a relevant table according to the value of real signal to noise ratio on each grid. When the value of real Îor/Ioc lies between the demodulation thresholds corresponding to two data rates, the lower rate is taken as the supportable forward DRC rate.

Step 205, setting terminal type and proportion:

In order to facilitate the setting of traffic, the terminal type is set according to the principle of terminal type corresponding to loaded service one by one in the step, and terminal ratio is set according to the service load in a simulation target.

Step 206, network simulation process;

Step 207, outputting simulation diagrams and statistical results and finishing the network simulation; and

Finally, the processing is end.

Figure 3 is the flow chart of the determination of candidate set in the step 203, including the following concrete steps:

Step 301, calculating the pilot frequency Ppiloti from each cell on the current grid through the following formula:

$$\text{Ppiloti} = P_{tx,i} * Pathloss_i \,,$$

Wherein, i=1 to M, $P_{tx,i}$ indicates the total transmission power of the $i^{th}$ cell; $Pathloss_i$ indicates the path loss from the $i^{th}$ cell to the current grid; and M indicates the number of the cells relevant to the current grid. As for a real network, partial cells far from a certain grid can be excluded because of very small relativity. The processing method is setting a certain path loss threshold value, when the path loss of a certain cell to the grid exceeds the threshold value, the cell can be considered irrelevant to the grid, so the value of M can be determined. Wherein, the path loss threshold value is consistent with the threshold value in the step 202.

Step 302, calculating the total receiving power Ioj on the grid through the following formula:

$$Io_j = \sum_{i=1}^{M} P_{tx,i} * Pathloss_i \,,$$ wherein, j indicates a grid marker.

Step 303, calculating the pilot frequency signal to noise ratio Eci/Ioj of each cell on the grid j through the hollowing formula:

$$\text{Ec}_i/\text{Io}_j = \text{Ppilot}_i/\text{Io}_j.$$

Step 304, sorting $Ec_i/Io_j$ (for instance, according to the sequence from maximum to minimum).

Step 305, the several cells corresponding to the maxmum Ec/Io are set to coverage cell candidate set positioned on the grid terminal:

In the step, the value of the candidate set adopts the algorithm combining the threshold value and the most limit; firstly set the threshold value of Ec/Io , the number K of the cells whose $Ec_i/Io_j$ is greater than the threshold value is calculated, if K>N (N indicates the number of the designed maximum candidate sets), former N cells are taken as candidates sets, and otherwise, former K cells are taken as the candidate sets.

Step 306, in each cell, recording the strongest cell as grid information of the cell. The strongest cell is defined as the cell receiving the greatest Ec/Io value is the strongest service cell of the grid.

Then the processing is finished.

A wireless network simulation method according to the embodiments is elaborated below by referring to the figures (namely, the network simulation process in the step 206).

In a word, the network simulation processing comprises two big sections of loops, including the snapshot loop processing in which one snapshot can be understood as a processing of a system reaching the stable state under the condition of one distribution of the given terminal and the results of the simulation processing are the average combination of a large number of snapshot results; and the iterative loop processing in which one snapshot includes a plurality of iterative loop processings, and the purpose of the iterative loop is to enable the system to reach a stable state. Previously, the forward or reverse iterative loop algorithm used in the relevant technologies adopts Monte Carto iterative algorithm; however, in the DO system, the forward resources are time division multiplexing, so the Monte Carto iterative algorithm is inapplicable. The forward algorithm of the embodiment adopts a novel algorithm in consideration of the forward scheduling and QoS instead of the Monte Carto iterative algorithm, and meanwhile, the universal reverse algorithm is improved on the basis of the Monte Carto iterative algorithm according to the match between QoS and forward. The implementation of the method is concretely described as follows:

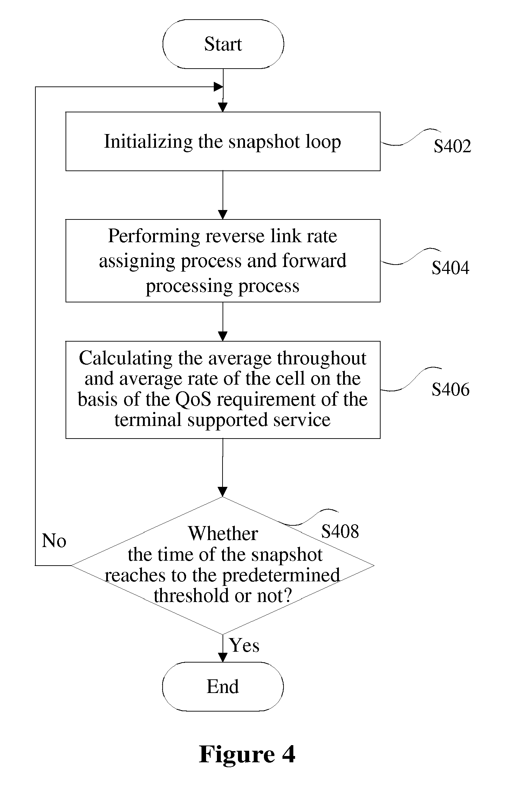

As shown in Figure 4, a wireless network simulation method comprises the following processing according to the embodiment: step 402, initializing the snapshot loop; step 404, performing reverse link rate assigning process and forward processing process; step 406, calculating the average throughput and average rate of the cell on the basis of the QoS requirement of the terminal supported service; and step 408, repeating the step 402 to the step 406 if the time of the snapshot loop does not reach to the predetermined threshold.

The method can be implemented through two schemes, the two schemes are described respectively as follows:

The first scheme

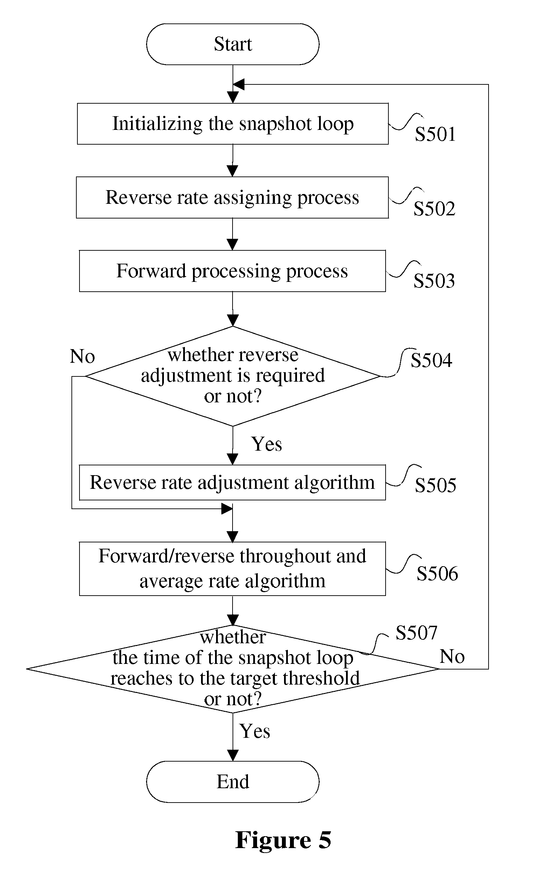

As shown in Figure 5, in the scheme, a wireless network simulation method concretely comprises the following processing:

Step 501, initializing the snapshot loop;

The initialization includes the following contents: (1) determining the random distributed position of the terminal in a predetermined mode, and randomly distributing the terminal in the designated geographic range of a network (for example, the mode of distributing the traffic of the cell according to the cell's covering areas, and the like); once the distribution mode is determined, the concrete positions of the terminals in each snapshot will be randomly determined; and the number of the terminals of each snapshot is coincidence with the Poisson distribution principle.

(2) Determining the correlated cell according to the grid of the terminal (covering the candidate set of the cell)

(3) Determining the random lognormal fading and stochastic power control error information of each terminal;

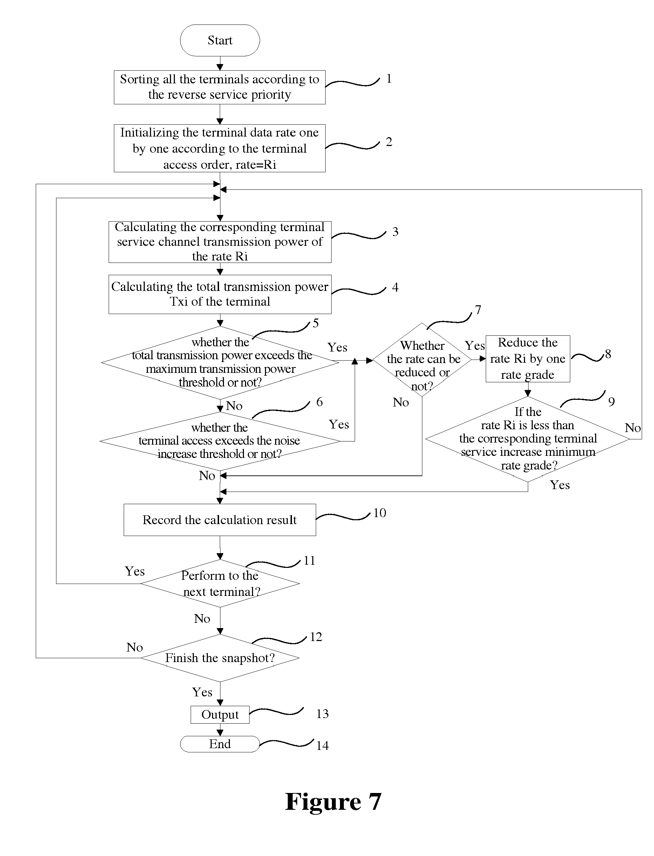

Step 502, reverse link rate assigning (as shown in Figure 7);

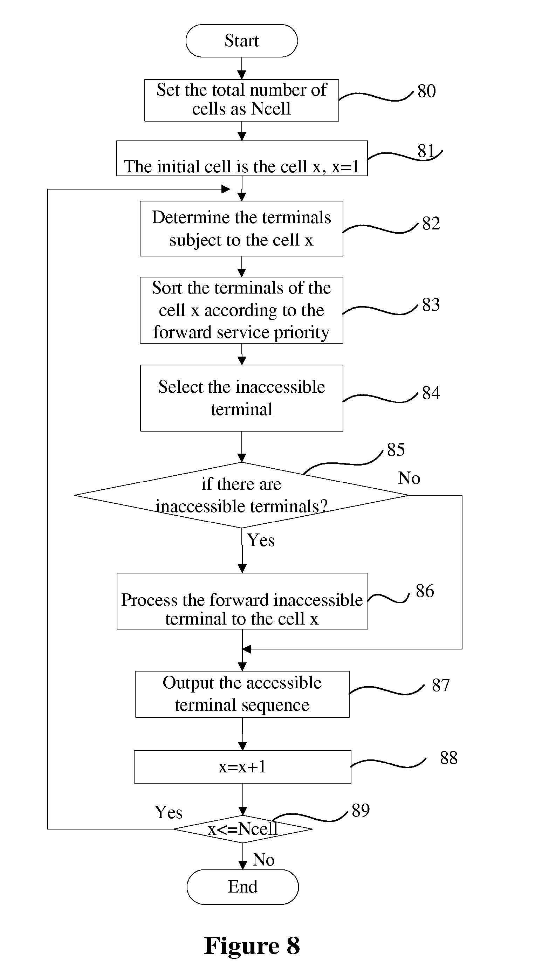

Step 503, performing forward processing with the reversely accessible terminal sequence obtained from the reverse iterative result as the input condition (as shown in Figure 8), thereby obtaining the terminal sequence simultaneously meeting the forward access conditions;

Step 504, judging whether an reverse adjustment is required or not, and performing step 505 if it is required and performing step 506 if it is not required.

It is here noticeable that in the process of judging, there are terminals deleted in the cell forward processing in step 508, then the terminals are deleted from the reverse iterative terminal set; and as long as at least one terminal is deleted, the reverse adjustment needs to be performed.

Step 505, performing the reverse rate adjustment algorithm which is basically the same as the reverse link rate assigning (as shown in Figure 7) and is different from the reverse link rate assigning in which the terminals are not selected randomly, and the terminal set is definite, namely being selected from the reverse iteration, but excludes the deleted terminals in the forward processing;

Step 506, calculating the forward, reverse throughout and average rate; In this step, the calculation of the cell forward average throughout can have the following situations:

Situation 1: Under the condition that all the terminal supported services have QoS requirements, the average throughout of the forward cell is calculated through the following formula: $Throughput_{FL} = \sum\limits_{i=1}^{p} R_{FL-i}$ , wherein, p indicates the number of forward and reverse access terminals, and $1 < p \leq m$;

Situation 2: Under the condition that the terminal supported services have no QoS requirements, the average throughout of the forward cell is calculated through the following formula: $Throughput_{FL} = \dfrac{\sum\limits_{i=m+1}^{n} DRC_i}{n-m}$ ; wherein, n-m indicates the number of forward access terminals; and

Situation 3: under the condition that part of the terminal supported services has QoS requirements, the average throughout of the forward cell is calculated through the following formula:

$$Throughput_{FL} = \dfrac{\sum\limits_{i=m+1}^{n} DRC_i}{n-m} * \beta + \sum\limits_{i=1}^{p} R_{FL-i} ,$$ wherein,, $\beta = 1 - \sum\limits_{i=1}^{p} \dfrac{R_{FL-i}}{DRC_i}$ ,

wherein, p indicates the number of forward and reverse access terminals with the QoS requirements, and $1 < p \leq m$; n-m indicates the number of the forward access terminals without QoS requirements;

Wherein, the forward average rates of the three situations are equal to the average throughout of the forward cells divided by the number of the forward access users. So the forward average rate can be calculated through the following formula: $DataRate_{FL} = Throughput_{FL} / NumMobile$ ; wherein, *NumMobile* indicates the number of forward access users. Moreover, the reverse average rate is calculated through the following formula: $DataRate_{RL} = Throughput_{RL} / NumMobile$ , wherein, *NumMobile* indicates the number of reverse access users, and

$$Throughput_{RL} = \sum\limits_{i=1}^{k} R_{RL-i} ,$$ $Throughput_{RL}$ indicates the average throughout of the reverse cells;

Step 507, judging whether the time of the snapshot loop reaches the predetermined threshold or not, continuing the next snapshot if the times are insufficient; otherwise, finishing the total snapshot loop. Wherein, the initial values of the variables of different snapshot loops are different, these variables include the number of terminals, positions of the terminals, the access order of the terminals and the like.

Step 508, finishing the processing.

The above is the description of the first scheme of the embodiment; and besides this, the second scheme can be practically implemented, and is elaborated as follows together with the drawings.

The second scheme:

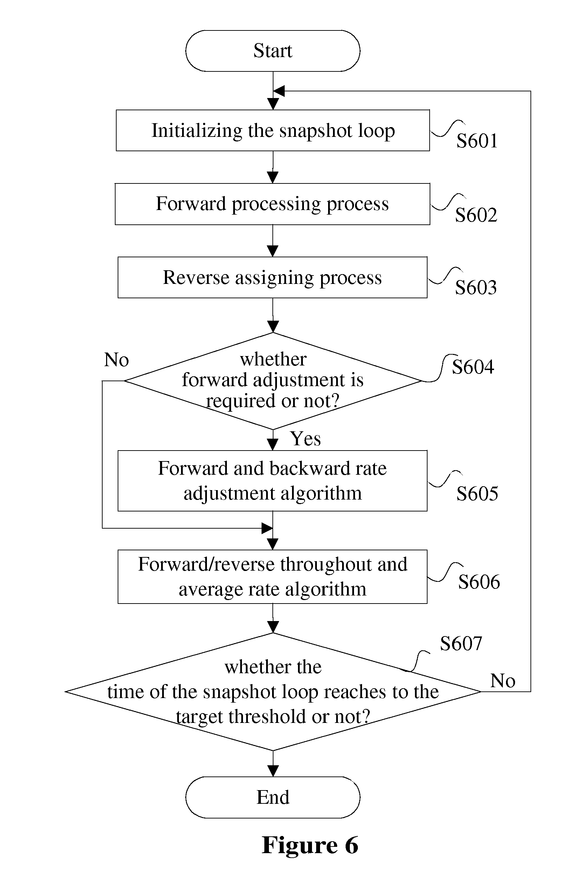

As shown in Figure 6, in the scheme, a wireless network analog simulation method comprises the following processing:

Step 601, processing the initialization of the snapshot loop;

Step 602, forward processing process(as shown in Figure 8);

Step 603, performing reverse link rate assigning with the forward accessible terminal sequence obtained from the forward processing as the input condition(as shown in Figure 7), thereby obtaining the terminal sequence simultaneously meeting the reverse access conditions.

Step 604, judging whether forward adjustment is required or not, and performing step 605 if it is required, and shifting to step 606 if it is not required;

For the judgment conditions, they are similar to those of the first scheme, if there are reverse inaccessible terminals during cell reverse link rate assigning of the step 603, the terminals are deleted from the set of forward terminals; and as long as one terminal is deleted at least, the forward adjustment algorithm needs to be performed.

Step 605, performing forward adjustment algorithm, which is basically the same as the forward processing process (as shown in Figure 8), and is different from the forward processing in which the terminal is not randomly selected, the terminal set is definite, namely, being selected from the forward processing process, but excludes the deleted terminals in the reverse link rate assigning process.

Step 606, calculating the forward, reverse throughout and average rate;

Step 607, judging whether the time of the snapshot loop reaches the predetermined threshold or not;

And finally, finishing the processing.

Figure 7 shows the reverse link rate assigning process in the step 404 (namely, the step 502 or 603), which mainly includes the following processing as shown in Figure 7:

Step 1, sorting all the terminals according to the reverse service QoS priority, putting the terminals with high priority service at the front of the sequence, putting the terminals with low priority service after the terminals with high priority service, placing the terminals without the QoS requirements randomly at the end of the sequence, moreover, keeping the terminal reverse access order valid in each reverse iterative calculation of the snapshot when the terminal reverse access order is determined (corresponding to the step 702);

Step 2, initializing the data rates of each terminal according to the terminal access order, and generally setting the initial rate of the terminal be the maximum rate of a system, and setting the data rate of the $i^{th}$ terminal is $R_i$ (corresponding to the step 704);

Step 3, calculating the terminal service channel transmission power corresponding to the rate $R_i$;

Step 4, calculating the total transmission power $Tx_i$ of the terminal according to the proportion of the service channel in the total terminal transmission power (step 3 and step 4 corresponding to the above step 706);

Step 5, judging whether $Tx_i$ exceeds the maximum transmission power threshold of the $i^{th}$ terminal or not, and performing step 7 if the judgment is yes, otherwise, performing step 6 (corresponding to the above step 708);

Step 6, judging whether the relevant cell received noise increase exceeds the threshold due to the access of the $i^{th}$ terminal; performing step 7 if the judgment is yes, otherwise performing step 10,and recording successful terminal access; (corresponding to the step 710);

Step 7, judging whether the data rate of the $i^{th}$ terminal can be reduced with the main judgment basis that if the $i^{th}$ terminal supported service requires the data rate to be a fixed value, the rate can not be reduced, and the step 10 is performed; and failed terminal access is recorded, and otherwise the step 8 is performed;

Step 8, reducing $R_i$ by one grade according to the regulations of the rate grade (the step 7 and step 8 correspond to the step 712);

Step 9, judging whether the $R_i$ being reduced by one grade is lower than the minimum rate threshold; performing step 10 if the judgment is yes, which shows the terminal is inaccessible and recording the failed terminal access, otherwise performing step 3 to carry out the next iteration;

Step 10, recording the calculation result of the terminal;

Step 11, performing the loop of next terminal till the reverse rate assigning judgment of all the terminals is finished;

Step 12, judging whether the reverse link meets the finishing decision condition of the snapshot or not , performing step 13 if the judgment is yes, otherwise performing step 3;

Step 13, outputting the final results, namely, the reverse access terminal sequence and reverse access rate;

Step 14, finishing the snapshot loop.

Wherein, for the judge condition in the step 12, it has two stages to decide whether one snapshot finishes or not, When the convergence conditions are met, if the variation of the reverse background noise increase of two adjacent iterations is smaller than a certain threshold, namely when the fluctuation of the reverse background noise increase of the two adjacent iterations is quite small, it is regarded as the iterative convergence, and the iterative loop exits, when the iteration is not convergent, but there are much more iteration times, the threshold of iteration times is set to prevent the condition that the loop can not be stopped, which is resulted from the iteration failing to get convergence, and when the iteration times are equal to the threshold, the iteration is forced to stop, and shift to the loop of next snapshot;

Figure 8 shows the forward processing process in the said step 404 (namely, the step 503 or step 602). As shown in Figure 8, concretely includes the following processing :

Step 80, setting the total number of the cells in the simulation range be Ncell (corresponding to the step 802);

Step 81, determining the initial cell is the cell x, x=1;

Step 82, determining the terminals are subject to the initial cell x (the step 81 and step 82 correspond to the above step 804);

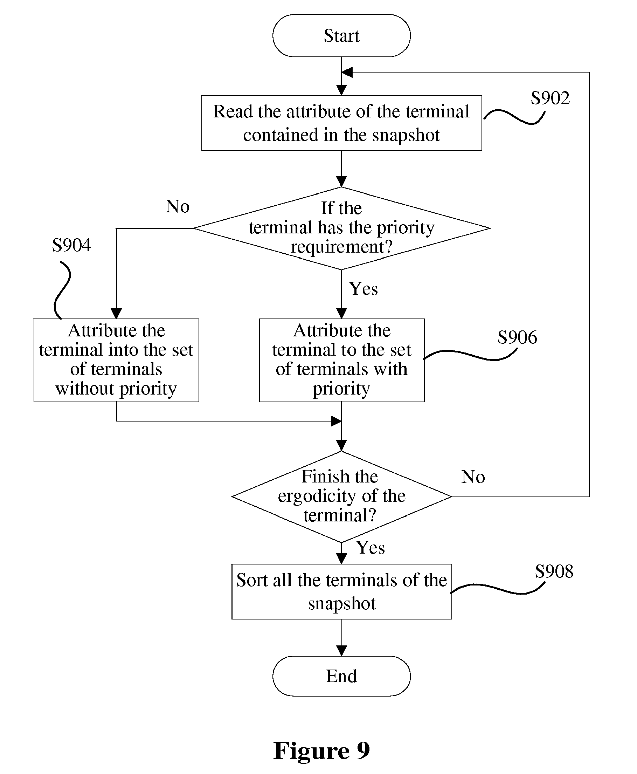

Step 83, sorting the terminals subject to the cell x according to the forward service priority (the concrete sort processing is shown in Figure 9); (corresponding to the step 806);

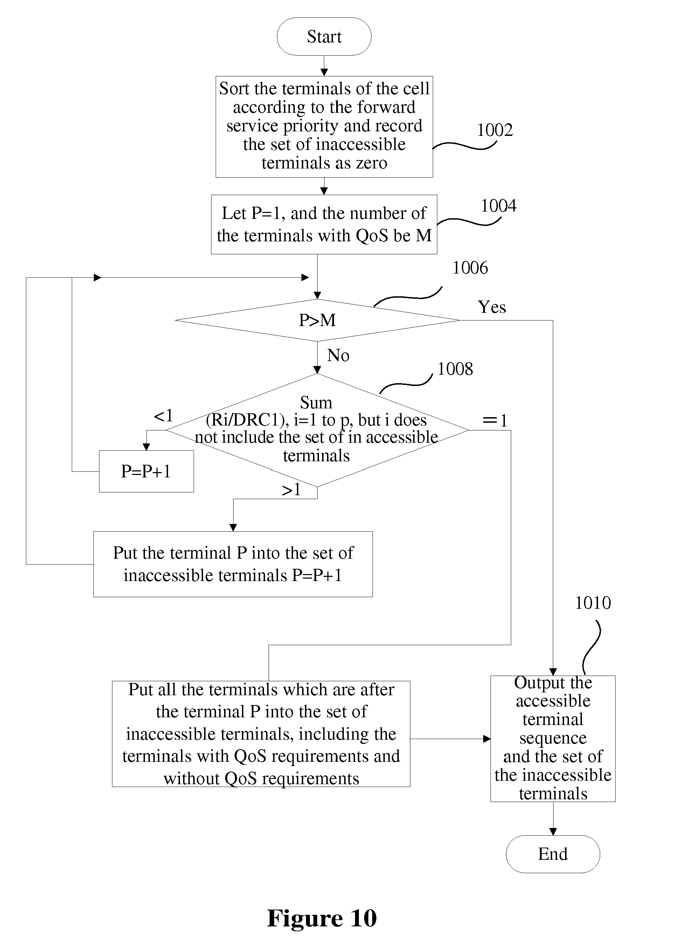

Step 84, selecting the terminals which can not meet the forward QoS requirements (the concrete select processing is shown in Figure 10); (corresponding to the above step 808)

Step 85, judging whether there are terminals which can not meet the forward QoS requirements or not, judging whether the terminals which can not meet the forward QoS requirements are necessarily processed or not according to the selected results of the step 84, performing step 86 if the judgment is yes, and performing step 87 if the judgment is no; (corresponding to the step 810)

Step 86, processing the forward inaccessible terminals to the cell x; there are a plurality of choices for the processing method, for example, (1) directly deleting this kind of terminals from the terminal sequence; (2) picking out the cell of the next high intensity from the candidate set of these terminals, attributing the terminals to the cell, and deleting the terminals from the reverse iteration results if there is no cell of the next high pilot intensity candidate set; wherein, preferably, adopting the method of directly deleting this kind of terminals from the terminal sequence (corresponding to the step 812);

Step 87, outputting the accessible terminal sequence and possibly to-be-deleted terminals (corresponding to the above step 814);

Step 88, x = x+1;

Step 89, judging whether x is smaller or equal to the number Ncell of the cells; and shifting to the step 82 if the judgment is yes, which shows having cell which is not processed, otherwise finishing the processing process;

Figure 9 shows the processing of sorting the priority of the terminal of the reverse snapshot loop result according to the forward service in the step 806 (namely, the step 83);

As shown in Figure 9, the step 806 includes the following steps:

Step 902, reading the attributes of the terminal contained in the snapshot one by one and checking whether the terminal supported services have the priority requirements or not;

Step 904, attributing the common terminals without the priority requirements into the set of forward non-priority terminals;

Step 906, attributing the QoS services terminals with the priority requirements into the set of forward priority terminals;

Step 908, sorting the terminals in the set of priority terminals according to the priority after the ergodicity of all the terminals and putting the terminals of the set of priority terminals at the front of the terminal sequence; and randomly sorting the terminals in the set of the forward non-priority terminals, and putting the terminals in the set of the forward non-priority terminals at the rear of the terminal sequence, thereby determining the access order of all the terminals in the snapshot;

And finally, finishing the processing process.

Figure 10 shows the flow of selecting the set of the forward inaccessible terminals in the step 808 (namely, the step 84) which includes the following processing as shown in Figure 10:

Step 1002, sorting the terminals of the cell according to the forward service priority, and regarding the set of inaccessible terminals as zero.

Here, suppose there are n terminals subject to the cell i, the terminals are sorted from high to low according to the priority as $AT_1$, $AT_2$, ....., $AT_n$, the DRC rates of the n terminals are respectively denoted as DRC1,DRC2,....., DRCn. wherein, the terminals from $AT_1$ to $AT_m$ are attributed to the set of forward priority terminals; and the rates of the QoS requirements of the n terminals are denoted as from $R_{FL}\text{-}_1$ to $R_{FL}\text{-}_m$ and the terminals from $AT_{m+1}$ to $AT_n$ are attributed to the set of forward non-priority terminals.

Step 1004, setting P=1; and the number of the terminals with QoS requirements is M, this step is mainly for the initialization of the following calculations;

Step 1006, judging whether p is greater than M or not; performing the processing to step 1010, if P is greater than M; performing the processing to step 1008, if P is smaller than or equal to M; here, p is greater than M shows all the terminals with QoS requirements are scanned over and the terminals without QoS requirements are unnecessarily judged whether they meet the requirements or not;

Step 1008, for the former P terminals with the QoS requirements, judging whether the following formulas are tenable or not;

$$\text{Formula 1:} \quad \frac{R_{FL-1}}{DRC_1} + \frac{R_{FL-2}}{DRC_2} + \quad \bullet\bullet\bullet \quad + \frac{R_{FL-p}}{DRC_p} < 1$$

$$\text{Formula 2:} \quad \frac{R_{FL-1}}{DRC_1} + \frac{R_{FL-2}}{DRC_2} + \quad \bullet\bullet\bullet \quad + \frac{R_{FL-p}}{DRC_p} = 1$$

$$\text{Formula 3:} \quad \frac{R_{FL-1}}{DRC_1} + \frac{R_{FL-2}}{DRC_2} + \quad \bullet\bullet\bullet \quad + \frac{R_{FL-p}}{DRC_p} > \quad 1;$$

It is here noticeable that in the formula 1, formula 2 and formula 3, the accumulation of the left parts of the formula need to delete the terminals in the set of forward inaccessible terminals.

When the formula 1 is met, namely, the accumulation sum is less than 1, which shows that the forward can bear the P terminal and the former terminals of the P terminal and there is more capacity to bear the non-QoS terminals; and at this time, P=P+1 is performed, and the processing is performed to step 1006.

If the formula 2 is tenable, namely, the accumulation is equal to 1, which shows the P terminal and the previous QoS terminals of the P terminal can just bear forward, and simultaneously can not bear any other terminal no matter whether there are QoS requirements; and at the time, all the terminals after the terminal P are put into the set of the inaccessible terminals, including the terminals with QoS requirements and the terminals without QoS requirements, and the processing is performed to the step 1010 (outputting the accessible terminal sequence and inaccessible terminal sequence).

When the formula 3 is met, namely, the accumulation sum is greater than 1, which shows that the terminal P is inaccessible, and the terminal P is required to be put in the set of forward inaccessible terminals. At the time, the terminals after the terminal P are possibly accessed, so the loop does not exit, and P=P+1 is performed, and the processing is performed to step 1006.

Step 1010, outputting the accessible terminal sequence and inaccessible terminal sequence, the sum of the two sequences is the total number of the terminals in the cell in the beginning of processing.

And finally, finishing the processing process.

Together with Figure 2, the simulation process of the CDMA2000-1X EVDO network as the example, the concrete implementation steps of the invention are elaborated as follows.

The concrete implementation steps are as follows:

(1) Introducing the three-dimensional electronic map, which including elevation, ground objects and vector information. and inputting the information of the network such as the base station, terminals, carriers, powers and the like in batch or one by one;

(2) Taking the general urban environment as an example, generally, when the path loss of a certain point reaches 200dB, the distance of the point to the cell transmitting signals is considered far enough, so, 200dB is set as the threshold, the path loss of all the surrounding grids less than and equal to the threshold of each cell is calculated, and form the path loss matrix of each cell;

(3) Calculating the pilot signal to noise ratio $Ec_i/Io_j$, corresponding to each cell on each grid, wherein, $Ec_i$ is the pilot energy of each chip from the $i^{th}$ cell, $Io_j$ is the total received power on the grid;

Wherein, i=1, ..., M, $Io_j = \sum_{i=1}^{M} Io_i$ , and M=20 ( in the general urban environment). In the step, the calculated values of pilot signal to noise ratio on each grid are sorted, N maximums are selected to be the covered cell candidate set positioned at the terminal of the grid, and generally, N=6. The utmost maximum of the pilot signal to noise ratio in the covered cell candidate set is marked at the corresponding grid of the path file matrix of the corresponding cell, namely the highest intensity service cell.

(4) Calculating the forward demodulation signal to noise ratio Îor/Ioc of each grid, and obtaining the supportable maximum rate DRC of each grid through checking the below Table 1. The following is the corresponding relationship between the forward demodulation signal to noise ratio threshold and DRC rate under the condition of Additive white Gaussian noise (Additive White Gaussian Noise, AWGN):

Table 1

| Data rate ( kbps ) | DRC value | Slot | Ior/Ioc (PER=1%) AWGN |
|---|---|---|---|
| 38.4 | 1 | 16 | -11.4 |
| 76.8 | 2 | 8 | -8.6 |

(continued)

| Data rate ( kbps ) | DRC value | Slot | lor/loc (PER=1%) AWGN |
|---|---|---|---|
| 153.6 | 3 | 4 | -5.6 |
| 307.2 | 5 | 4 | -2.5 |
| 307.2 | 4 | 2 | -2.5 |
| 614.4 | 7 | 2 | 0.5 |
| 614.4 | 6 | 1 | 0.7 |
| 921.6 | 8 | 2 | 3.2 |
| 1228.8 | 10 | 2 | 5.9 |
| 1228.8 | 9 | 1 | 5.5 |
| 1536 | 13 | 2 | 8.11 |
| 1843.2 | 11 | 1 | 10.8 |
| 2457.6 | 12 | 1 | 15.4 |
| 3072 | 14 | 1 | 20.45 |

Table 1 comes from the minimum test standard «Recommended Minimum Performance Standards for cdma2000 High Rate Packet Data Access Terminal» .

(5) Supposed that the data rate QoS requirements of the network supported service are 1.2Mbps, 300kbps and 112kbps, and the ratio of the services is 1:2:1, then set the three terminal types correspond to the three services respectively, and the number ratio of the three types of terminals is 1:2:1, even though the terminals of a certain type can support a plurality of services in practice, the terminals are set separately in the simulation, facilitating the distribution setting of the traffic.

(6) Initializing the snapshot parameters, including the number of terminals , distribution position and the like.

(7) Performing reverse rate assigning (as shown in Figure 6), determining the reverse access order of the terminals according to the QoS priority of the terminal supported service , iteratively determining the reverse access rate and failure information of each terminal in the terminal access sequence, and obtaining the terminal sequence of successful reverse access.

(8) Judging whether the forwards of the reverse successfully accessible terminals need to support services with the QoS requirements, directly jumping to (11) , if the judgment is no, and calculating the average throughout of the reverse cell; performing (9) if the judgment is yes;

(9) Here, the algorithm for forward QoS requirement processing during one snapshot is shown here with a supposition.

Suppose that there are six reverse successfully accessible terminals, the terminals are sorted according to the forward service QoS and the QoS priority from high to low to obtain the terminal sequence AT1, AT2, ....., AT6. Setting AT1 to AT4 is the terminal with farward Qos requirement, AT5 and AT5 are the common services terminal without Qos requirement, as shown in the below Table 2:

Table 2

| Terminal sequence number | $AT_1$ | $AT_2$ | $AT_3$ | $AT_4$ | $AT_5$ | $AT_6$ |
|---|---|---|---|---|---|---|
| Forward service QoS requirement | yes | | | no | | |
| Forward service priority | 1 | 1 | 2 | 3 | / | / |
| Forward QoS supported data rate ( bps ) | 200k | 500k | 100k | 300k | / | / |
| DRC data rate (bps) | 1.2288M | 2.4576M | 307.2k | 921.6k | 307.2k | 153.6k |

Substituting the above assumed conditions into the formula 1 to the formula 3, then obtaining:

$$\frac{R_{FL-1}}{DRC_1} + \frac{R_{FL-2}}{DRC_2} + \quad \bullet\bullet\bullet \quad + \frac{R_{FL-p}}{DRC_p}$$

$$= \frac{R_{FL-1}}{DRC_1} + \frac{R_{FL-2}}{DRC_2} + \frac{R_{FL-3}}{DRC_3} + \frac{R_{FL-4}}{DRC_4}$$

$$= \frac{200}{1228.8} + \frac{500}{2457.6} + \frac{100}{307.2} + \frac{300}{921.6}$$

$$\approx 1.0173$$

$$> 1$$

Wherein, when p=3, having

$$\frac{R_{FL-1}}{DRC_1} + \frac{R_{FL-2}}{DRC_2} + \frac{R_{FL-3}}{DRC_3}$$

$$= \frac{200}{1228.8} + \frac{500}{2457.6} + \frac{100}{307.2}$$

$$\approx 0.692$$

$$< 1$$

So, the forward access of $AT_4$ is not allowed to perform, so as to meet the QoS requirements of the three terminals $AT_1$ to $AT_3$ with high forward service priority. Meanwhile, the common terminals $AT_5$ and $AT_6$ still can be accessed because the forward capacity does not reach saturation after the terminals from $AT_1$ to $AT_3$ are accessed, namely, the final forward access terminal sequence comprises $AT_1$, $AT_2$, $AT_3$, $AT_5$ and $AT_6$.

(10) Take the above terminal sequence as the reverse access terminal sequence, re-performing the iteration of the reverse rate assigning.

Suppose that the reverse terminal rate after iterated is shown in Figure 3 as follows:

Table 3

| Terminal sequence number | $AT_1$ | $AT_2$ | $AT_3$ | $AT_5$ | $AT_6$ |
|---|---|---|---|---|---|
| Data rate after reverse adjustment ( bps ) | 76.8k | 307.2k | 76.8k | 153.6k | 38.4k |

(11) Calculating the average throughout of the forward and reverse cell;

Compounding the third situation, according to the assumed conditions in Table 2 and Table 3, namely the access terminal sequence is the union of the QoS service forward terminals and the terminals without QoS.

Substituting the values of Table 2 into the formula $Throughput_{FL} = \dfrac{\sum\limits_{i=m+1}^{n} DRC_i}{n-m} * \beta + \sum\limits_{i=1}^{p} R_{FL-i}$ , thus obtaining the forward average cell throughout:

$$Throughput_{FL} = \frac{\sum_{i=m+1}^{n} DRC_i}{n-m} * \beta + \sum_{i=1}^{p} R_{FL-i}$$

$$= \frac{\sum_{i=5}^{6} DRC_i}{2} * (1 - \sum_{i=1}^{3} \frac{R_{FL-i}}{DRC_i}) + \sum_{i=1}^{3} R_{FL-i}$$

$$= \frac{307.2k + 153.6k}{2} * (1 - 0.692) + (200k + 500k + 100k)$$

$$= 870.96 kbps$$

Substituting the values of Table 3 into the formula $Throughput_{RL} = \sum_{i=1}^{k} R_{RL-i}$ , thus obtaining the reverse average cell throughout:

$$Throughput_{RL} = \sum_{i=1}^{p} R_{RL-i} + \sum_{i=m+1}^{n} R_{RL-i}$$

$$= 76.8k + 307.2k + 76.8k + 153.6k + 38.4k$$

$$= 652.8 kbps$$

(12) Calculating the forward and reverse average rates:

Forward average rate=forward cell average throughout/ the number of forward access users
= 870.96k/5
= 174.192kbps

Reverse average rate=reverse cell average throughout/ the number of reverse access users
= 652.8k/5
= 130.56kbps

(13) Judging whether the time of the snapshot loop reaches the predetermined threshold or not, changing the initial variables of the snapshot loop if the times are insufficient, namely changing the information of terminals such as the number, positions, access order and the like to continue the next snapshot, and otherwise finishing the total snapshot loops.

(14) Statistically averaging all the results of the snapshot loop, outputting the simulation drawings, and finishing the simulation.

In a word, aiming at the characteristics of the CDMA2000-1XEVDO air interfacing technology such as forward full power transmission, forward partial services with QoS requirements, forward services require scheduling, rate control and the like, improves the iteration flows of traditional forward and reverse, and introduces the processing method for the services with QoS requirements, simultaneously simulates the dynamic scheduling strategy in an approximate static method, solves the defect that the traditional simulation method can not obtain the forward average rate and cell average throughout. With the technical schemes of the invention, the simulation model can be highly approximated to the network condition of the real EVDO system conditions, and the EVDO network planning and optimization can be more efficiently directed.

The preferred embodiment of the present invention is described for the purpose of illustration, not for limiting the present invention. For those skilled in the field, it is obvious that various alterations and modifications can be made to the present invention. Any alterations, substitutions and modifications falling into the spirit and principle of the present invention shall be protected by the claims of the present invention.

## Claims

1. A wireless network analog simulation method, **characterized in that** it comprises the following processing:

   Step 402, initializing the snapshot loop;
   Step 404, performing reverse link rate assigning process and forward processing process;
   Step 406, calculating the average throughput and average rate of the cell on the basis of the QoS, Quality of service, requirements of the terminal supported service; and
   Step 408, repeating the said step 402 to the said step 406 if the time of the snapshot loop does not reach to predetermined threshold.

2. The wireless network analog simulation method according to claim 1, **characterized in that** in the said step 406, and under the condition that all the terminal supported services have QoS requirements, the average throughout of the forward cell is calculated through the following formula: $Throughput_{FL} = \sum_{i=1}^{p} R_{FL-i}$ , wherein, p indicates the number of forward reverse access terminals, and 1<p≤m.

3. The wireless network analog simulation method according to claim 1, **characterized in that** in the said step 406, and under the condition of all the terminal supported services have no QoS requirements, the average throughout of the forward cell is calculated through the following formula: $Throughput_{FL} = \dfrac{\sum_{i=m+1}^{n} DRC_i}{n-m}$ , wherein, n-m indicates the number of forward access terminals.

4. The wireless network analog simulation method according to claim 1, **characterized in that** in the step 406, and under the condition of part of the said terminal supported services have QoS requirements, the average throughout of the forward cell is calculated through the following formula: $Throughput_{FL} = \dfrac{\sum_{i=m+1}^{n} DRC_i}{n-m} * \beta + \sum_{i=1}^{p} R_{FL-i}$ ;

   wherein, $\beta = 1 - \sum_{i=1}^{p} \dfrac{R_{FL-i}}{DRC_i}$ , wherein, p indicates the number of the forward reverse access terminals with QoS requirements, and 1<p≤m, and n-m indicates the number of the forward access terminals without QoS requirements.

5. The wireless network analog simulation method according to one of the claims 2 to 4, **characterized in that** the forward average rate is calculated through the following formula: DataRate$_{FL}$ = Throughput$_{FL}$ / *NumMobile,* wherein, *NumMobile* indicates the number of forward access users.

6. The wireless network analog simulation method according to one of the claims 2 to 4, **characterized in that** the reverse average rate is calculated through the following formula: DataRate$_{RL}$ = Throughput$_{RL}$ / *NumMobile,* wherein, *NumMobile* indicates the number of reverse access users, and $Througput_{RL} = \sum\limits_{i=1}^{k} R_{RL-i}$ , *Throughput* $_{RL}$ indicates the average throughout of the reverse cell.

7. The wireless network analog simulation method according to claim 1, **characterized in that** in the said step 404, the said reverse link rate assigning process comprises:

> Step 702, sorting all the terminals according to the reverse QoS priority, putting the terminals with high QoS priority service at the front of the sequence, putting the terminals with low QoS priority service after the said terminals with high QoS priority service, placing the terminals without QoS requirement randomly at the end of the sequence;
> Step 704, initializing the data rate of each terminal according to the terminal access order;
> Step 706, calculating the terminal service channel transmission power corresponding to the data rate, and the total transmission power of the terminal;
> Step 708, judging whether the said total transmission power of the terminal exceeds the maximum transmission power threshold of the said terminal; performing the processing to step 712 if the judge result is yes, otherwise to step 710;
> The said step 710, judging whether the relevant cell received noise increase exceeds the threshold due to the access of the ith terminal; and performing the processing to the said step 712 if the judge result is yes, otherwise, recording successful terminal access; and
> The said step 712, judging whether the data rate of the ith terminal can be reduced; and reducing the data rate by one grade according to the regulations of the rate grade if the judge result is yes, otherwise, recording failed terminal access.

8. The wireless network analog simulation method according to claim 7, **characterized in** judging whether the said data rate grade-reduced is lower than the minimum rate threshold after the said data rate is reduced by one grade in the said step 712; and returning the processing to the said step 706 if the judge result is not, otherwise, recording failed terminal access.

9. The wireless network analog simulation method according to claim 1, in which the forward processing process in the said step 404 comprises:

> Step 802, determining the total number of the cells within the simulation range and the initial cell;
> Step 804, determining the terminals subject to the initial cell;
> Step 806, sorting the said terminal according to the forward service priority;
> Step 808, selecting the terminals which can not meet the forward QoS requirements;
> Step 810, judging whether there is the said terminal which can not meeting the QoS requirement according to the selected result of the said step 808 and if the result is yes, performing to step 812, otherwise, performing the step 814;
> The said step 812, processing the inaccessible forward terminal to the initial cell; and
> The said step 814, inputting the accessible forward terminal sequence to the initial cell and possible to-be-deleted terminal.

10. The wireless network analog simulation method according to claim 9, **characterized in that** the said step 806 concretely comprises:

> Step 902, reading the attributes of the terminals contained in the snapshot one by one and checking whether the said terminal supported services have priority requirements;
> Step 904, attributing the terminals without priority requirements to the set of terminals without forward priority;
> Step 906, attributing the QoS services terminals with priority requirements to the set of terminals with forward priority; and
> Step 908, sorting the terminals in the set of terminals with forward priority according to the priority after the ergodicity of all the terminals, and putting the said terminals in the set of terminals with forward priority at the front of the terminal sequence; and randomly sorting the terminals in the set of terminals without forward priority, and putting the terminals in the set of terminals without forward priority at the rear of the terminal sequence.

**11.** The wireless network analog simulation method according to claim 10, **characterized in that** the step 808 concretely comprises:

Step 1002, sorting the terminals of the cell according to the forward service priority;

Step 1004, setting P=1, and determining the number of the terminals with QoS requirements is M, wherein, M is an integer which is greater than or equal to zero;

Step 1006, judging whether P is greater than M or not, outputting the accessible terminal sequence and inaccessible terminal sequence if P is greater than M, and performing the processing to step 1008 if P is smaller than or equal to M;

The said step 1008, the previous P terminals with QoS requirements are judged according to the following formulas, and the subsequent processing is performed according to the judge results:

$$\text{Formula 1:} \quad \frac{R_{FL-1}}{DRC_1} + \frac{R_{FL-2}}{DRC_2} + \quad \bullet\bullet\bullet \quad + \frac{R_{FL-p}}{DRC_p} < 1$$

$$\text{Formula 2:} \quad \frac{R_{FL-1}}{DRC_1} + \frac{R_{FL-2}}{DRC_2} + \quad \bullet\bullet\bullet \quad + \frac{R_{FL-p}}{DRC_p} = 1$$

$$\text{Formula 3:} \quad \frac{R_{FL-1}}{DRC_1} + \frac{R_{FL-2}}{DRC_2} + \quad \bullet\bullet\bullet \quad + \frac{R_{FL-p}}{DRC_p} > 1 \quad ;$$

Wherein, if the said formula 1 is tenable, set P=P+1, and the processing is performed to the said step 1006; if the said formula 2 is tenable, all the terminals after the P$^{th}$ terminal are put into the set of the inaccessible terminals, and the accessible terminal sequence and the inaccessible terminal sequence are outputted; and if the said formula 3 is tenable, the P$^{th}$ terminal is put into the set of said inaccessible terminals, P=P+1 is obtained, and the processing is performed to the said step 1006.

**12.** The wireless simulation method according to claim 1, **characterized in that** between the said step 404 and the said step 406, the forward adjustment algorithm is performed, if forward adjustment is required, or the reverse adjustment algorithm is performed if reverse adjustment is required.

**13.** The wireless network analog simulation method according to claim 1, **characterized in that** further comprising the following processing before the said step 402:

Calculating the corresponding forward DRC, Date Rate Control, rate of the candidate sets on each grid on the basis of the comparison of the real forward demodulation signal to noise ratio Îor /Ioc and system demodulation threshold;

Wherein, the current grid supportable forward DRC rate groups corresponding to different cells are determined by checking the table according to the value of the real signal to noise ratio Îor /Ioc on the said each grid; when the real Îor/Ioc value is between the corresponding demodulation thresholds of two data rates, the lower rate is taken as the supportable said forward DRC rate.

**Figure 1**

**Figure 2**

Start

Calculating the pilot power $Ppilot_i$ from each cell on the current grid — S301

Calculating the total receiving power $Io_j$ on the grid — S302

Calculating the pilot signal to noise ratio $Ec_i/Io_j$ of each cell on the grid — S303

Sort $Ec_i/Io_j$ — S304

Determining the candidate set of the terminals on the grid — S305

Record the cell with the highest intensity as the cell grid information in each cell — S306

End

**Figure 3**

Start

Initializing the snapshot loop — S402

Performing reverse link rate assigning process and forward processing process — S404

Calculating the average throughout and average rate of the cell on the basis of the QoS requirement of the terminal supported service — S406

No

Whether the time of the snapshot reaches to the predetermined threshold or not? — S408

Yes

End

**Figure 4**

**Figure 5**

Start

Initializing the snapshot loop — S601

Forward processing process — S602

Reverse assigning process — S603

whether forward adjustment is required or not? — S604

No

Yes

Forward and backward rate adjustment algorithm — S605

Forward/reverse throughout and average rate algorithm — S606

S607

whether the time of the snapshot loop reaches to the target threshold or not?

No

End

**Figure 6**

Start

Sorting all the terminals according to the reverse service priority 1

Initializing the terminal data rate one by one according to the terminal access order, rate=Ri 2

Calculating the corresponding terminal service channel transmission power of the rate Ri 3

Calculating the total transmission power Txi of the terminal 4

whether the total transmission power exceeds the maximum transmission power threshold or not? 5

Whether the rate can be reduced or not? 7

Reduce the rate Ri by one rate grade 8

whether the terminal access exceeds the noise increase threshold or not? 6

If the rate Ri is less than the corresponding terminal service increase minimum rate grade? 9

Yes

Yes

No

No

Yes

No

No

Yes

Record the calculation result 10

Perform to the next terminal? 11

Yes

No

Finish the snapshot? 12

No

Yes

Output 13

End 14

**Figure 7**

```
                    ┌─────────────┐
                    │    Start    │
                    └──────┬──────┘
                           ▼
              ┌─────────────────────────┐
              │ Set the total number of │      80
              │    cells as Ncell       │
              └────────────┬────────────┘
                           ▼
          ┌──────────────────────────────────┐
          │ The initial cell is the cell x, x=1 │   81
          └────────────────┬─────────────────┘
                           ▼
              ┌─────────────────────────┐
              │ Determine the terminals │      82
              │   subject to the cell x │
              └────────────┬────────────┘
                           ▼
              ┌─────────────────────────┐
              │ Sort the terminals of the │    83
              │  cell x according to the  │
              │  forward service priority │
              └────────────┬────────────┘
                           ▼
              ┌─────────────────────────┐
              │  Select the inaccessible │     84
              │        terminal         │
              └────────────┬────────────┘
                           ▼
                      ╱──────────╲                85
                    ╱  if there are ╲   No
                   ╲ inaccessible    ╱────────┐
                    ╲  terminals?   ╱         │
                      ╲──────────╱            │
                           │ Yes             │
                           ▼                 │
            ┌──────────────────────────────┐ │
            │ Process the forward inaccessible │  86
            │    terminal to the cell x     │ │
            └──────────────┬───────────────┘ │
                           ◄─────────────────┘
                           ▼
              ┌─────────────────────────┐
              │   Output the accessible │      87
              │     terminal sequence   │
              └────────────┬────────────┘
                           ▼
              ┌─────────────────────────┐
              │         x=x+1           │      88
              └────────────┬────────────┘
                           ▼
              Yes       ╱──────╲              89
            ┌───────────╲ x<=Ncell ╱
            │            ╲──────╱
            │               │ No
            │               ▼
            │         ┌───────────┐
            │         │    End    │
            │         └───────────┘
            └──────────────────────┘
```

**Figure 8**

Start

Read the attribute of the terminal
contained in the snapshot — S902

If the
terminal has the priority
requirement?

No

S904

Yes

Attribute the
terminal into the set
of terminals
without priority

Attribute the
terminal to the set
of terminals with
priority — S906

Finish the
ergodicity of the
terminal?

No

Yes

Sort all the terminals of the
snapshot — S908

End

**Figure 9**

Start

Sort the terminals of the cell according to the forward service priority and record the set of inaccessible terminals as zero — 1002

Let P=1, and the number of the terminals with QoS be M — 1004

1006

P>M

Yes

No

1008

Sum (Ri/DRC1), i=1 to p, but i does not include the set of in accessible terminals

<1

P=P+1

=1

>1

Put the terminal P into the set of inaccessible terminals P=P+1

Put all the terminals which are after the terminal P into the set of inaccessible terminals, including the terminals with QoS requirements and without QoS requirements

1010

Output the accessible terminal sequence and the set of the inaccessible terminals

End

**Figure 10**

# INTERNATIONAL SEARCH REPORT

| International application No. |
| --- |
| PCT/CN2007/001860 |

**A. CLASSIFICATION OF SUBJECT MATTER**

H04Q7/34(2006.01)i

According to International Patent Classification (IPC) or to both national classification and IPC

**B. FIELDS SEARCHED**

Minimum documentation searched (classification system followed by classification symbols)

IPC: H04Q; H04L; G06F

Documentation searched other than minimum documentation to the extent that such documents are included in the fields searched

Electronic data base consulted during the international search (name of data base and, where practicable, search terms used)

CNPAT,WPI,EPODOC,PAJ,CNKI,IEEE: net+, simulat+, snapshot, loop, link, rate, throughput, threshold

**C. DOCUMENTS CONSIDERED TO BE RELEVANT**

| Category* | Citation of document, with indication, where appropriate, of the relevant passages | Relevant to claim No. |
| --- | --- | --- |
| A | CN1845630A （XI AN JIAOTONG UNIVERSITY） 11 Oct. 2006 （11.10.2006） see the whole document | 1-13 |
| A | JP2004241800A （TELECOMM ADVANCEMENT ORGANIZATION OF JAPANESE et al.） 26 Aug. 2004 （26.08.2004） see the whole document | 1-13 |
| A | US2005/0195749A1 （Elmasry et al.） 08 Sept. 2005 （08.09.2005） see the whole document | 1-13 |

☐ Further documents are listed in the continuation of Box C.      ☒ See patent family annex.

| *   Special categories of cited documents: | "T"   later document published after the international filing date or priority date and not in conflict with the application but cited to understand the principle or theory underlying the invention |
| --- | --- |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim (S) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"document member of the same patent family |

| Date of the actual completion of the international search | Date of mailing of the international search report |
| --- | --- |
| 07 Dec. 2007 （07.12.2007） | **20 Dec. 2007 (20.12.2007)** |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer ZHANG, Xiang Telephone No. (86-10)82336234 |
| --- | --- |

Form PCT/ISA/210 (second sheet) (April 2007)

## INTERNATIONAL SEARCH REPORT
Information on patent family members

| International application No. |
| --- |
| PCT/CN2007/001860 |

| Patent Documents referred in the Report | Publication Date | Patent Family | Publication Date |
| --- | --- | --- | --- |
| CN1845630A | 11.10.2006 | None | |
| JP2004241800A | 26.08.2004 | None | |
| US2005/0195749A1 | 08.09.2005 | EP1571780A1 | 07.09.2005 |
| | | AU2005201005A1 | 22.09.2005 |
| | | CA2499334A1 | 05.09.2005 |

Form PCT/ISA/210 (patent family annex) (April 2007)